# EUROPEAN PATENT APPLICATION

(11) **EP 2 836 032 A1**
(43) Date of publication of application: **11.02.2015**
(21) Application number: 14305130.8
(22) Date of filing: 30.01.2014
(51) Int. Cl.: H04W 52/02

(54) **Providing a coverage enhanced mode of operation within a wireless network**

(30) Priority: 09.08.2013 EP 13306142
(71) Applicant: ALCATEL LUCENT, 92100 Boulogne-Billancourt (FR)
(72) Inventor: Wong, Shin Horng, Swindon, Wiltshire SN5 7DJ (GB); Lim, Seau Sian, Swindon, Wiltshire SN5 7DJ (GB)
(74) Representative: Mills, Julia

(57) **Abstract**

A method and computer program, network node and user equipment for use in a wireless communication network that can support communication with user equipment according to a coverage enhanced communication mode which utilises repetition of some messaging to increase coverage, and according to a non coverage enhanced mode where said some messaging is not repeated. Where a coverage enhanced mode indicator indicating to the user equipment whether the network node is currently operating in the coverage enhanced mode or not, is transmitted to the user equipment in a signal that is transmitted to user equipment that is not currently connected to said network, such that non connected user equipment is aware of the current mode of operation of the network node.

## Description

### FIELD OF THE INVENTION

The present invention relates to the field of user equipment communicating with a network node of a wireless communication network and in particular, to providing coverage enhancement which utilises repetition of messaging to help the user equipment to communicate with the network.

### BACKGROUND

Wireless communication networks are known. In a cellular system, radio coverage is provided to user equipment, for example, mobile telephones, by geographical area. Those geographical areas of radio coverage are known as cells. A base station is located in each geographical area to provide the required radio coverage. A base station may support more than one cell providing coverage in the same geographical area. User equipment in the area served by a base station receives information and data from that base station and transmits information and data to that base station.

Information and data transmitted by a base station to user equipment occurs on channels of radio carriers known as downlink carriers. Information and data transmitted by user equipment to a base station occurs on uplink channels of radio carriers known as uplink carriers.

Some user equipment are machine type communication devices MTC that are used by a machine for a specific application. One example of such a device is a smart utility meter. Such devices may not be mobile and may be located in a basement and therefore suffer from high attenuation making it difficult for the MTC device to communicate with the network. Some techniques for enhancing the coverage of the base station to allow them to communicate with such devices would be desirable. Furthermore, limiting the power consumption of such user equipment that may be battery powered would also be desirable.

### SUMMARY

A first aspect of the present invention provides a method performed by a network node of providing network connection information to a user equipment for connecting to a wireless communication network, said wireless communication network configured to support communication with said user equipment according to a coverage enhanced communication mode which utilises repetition of some messaging to increase coverage, and according to a non-coverage enhanced mode where said some messaging is not repeated said method comprising: broadcasting a master information block comprising information regarding the network from the network node; broadcasting system information blocks comprising information on how to attach to the network; and signalling to user equipment that is not currently connected to said network, a coverage enhanced mode indicator indicating to said user equipment whether said network node is currently operating in said coverage enhanced mode or not.

Techniques for providing coverage enhancement techniques to aid communication between user equipment located in high attenuation areas and a wireless network may be desirable. These techniques may include implementing a particular communication technique at the base station; for example, repeating transmission of messages such that user equipment located in areas of low signal penetration have multiple opportunities to receive, accumulate and re-compile the messages. Such repetitions may be used to increase coverage provided in these areas of high attenuation. Similarly when transmitting, the user equipment may repeat messages to increase the likelihood of a base station being able to decode the message. The number of required repetitions may be significant and such a level of repetition has significant impact on the spectral efficiency of a network.

The inventors of the present invention recognised these disadvantages for a network node such as a base station or eNodeB operating in a coverage enhanced mode and realised that it may be desirable to limit the time that such base stations operate in this mode. However, they also recognised that where user equipment is battery powered then it is also desirable for the equipment to conserve power. Attempting to connect to a network and decode messages consumes a lot of their power and if a user equipment tries to do this when the network node is not in an enhanced coverage mode and the user equipment is located in an area of high penetration loss, then the equipment may well not succeed and repeatedly trying will waste power.

The inventors have addressed these competing problems by providing a coverage enhanced mode indicator in a signal that the user equipment can receive and decode even when it is not connected to the network. In this regard network nodes are configured to transmit certain types of signal that can be received and decoded by user equipment when they are not connected to the network. A user equipment can only exchange data with the network when it is connected to the network and to connect the user equipment and network node will perform a handshake procedure including requests and responses which allow the network node and user equipment to exchange information about their properties and reserve dedicated communication channels whereupon they become connected and are able to exchange data via the network.

When the user equipment is not connected or is in a so-called idle mode the user equipment must still be able to receive and decode some messages such that it can exchange the information required to connect. Thus, there are some messages that can be sent to user equipment when it is not connected to the network. These include signals that are broadcast by the network node to all user equipment within range of the broadcast and do not require a connection to be received and paging messages that are paged to a specific user equipment to signal perhaps a change in network conditions or to indicate that there is a message for the user equipment such that it should connect to the network. If an indicator for coverage enhanced mode is included in one of these signals then even when the user equipment is not connected to the network it can still determine whether the network is currently operating in a coverage enhanced mode or not.

Although the provision of such an indicator increases the overheads of such signals which a system generally tries to reduce, the provision of such an indication allows user equipment to know the mode of operation of the network node and if it is not currently operating in a coverage enhanced mode the user equipment can decide not to proceed with any connection attempt and can transition to a low power or dormant mode in which it is not connected and is not trying to connect to the network. It can then attempt the connection procedure again later. In this way the system benefits from the advantages of the spectrally inefficient enhanced coverage mode being switched off for some of the time, while managing the potential power implications for user equipment that require such coverage.

In some embodiments the enhanced coverage mode indicator comprises a single bit. The use of a single bit to indicate such a mode requires a particular bit in one of the signals to be reserved for this purpose and as such there is an overhead associated with it. However, it has the advantage of a low increase in the amount of signalling required and an increased chance of the user equipment being able to receive and decode the information, as opposed to the equipment needing to successfully receive and decode a particular sequence or pattern.

In some embodiments, said master information block comprises said coverage enhanced mode indicator.

Although the coverage enhanced mode indicator can be transmitted to the user equipment in any one of a number of forms, in some embodiments it is located in the master information block. The master information block is the first piece of information that the user equipment receives in a connection process following synchronisation and, thus, including the coverage enhanced mode indicator in this information block can be advantageous, as the user equipment knows quickly within the connection procedure whether or not the network node is operating in coverage enhanced mode and whether or not it should persist in trying to connect or should enter a dormant mode. In this way, the efficiency of the system is increased as the user equipment does not waste power trying to transmit and receive information that cannot overcome the attenuation without repetitions. In this regard, the master information block is not only the first information to be received following synchronisation, but it is also limited in size and even when not in an enhanced coverage mode it is broadcast fairly often, such that user equipment can generally succeed in receiving it and can act accordingly.

In some cases, the coverage enhanced mode indicator is in one of the currently reserved bits within the master information block. In this regard, the master information block contains a number of bits which are used for indicating different things about the network. There are currently several reserved bits which are not used for any purpose and which there is a prejudice against using if possible to retain the possibilities of their use for future enhancements. However, the use of one of these bits to indicate coverage enhanced mode leads to an improved system with the advantages associated with allowing communication between user equipment in areas of low penetration whilst maintaining the spectral efficiency of the network at a reasonable level.

In other embodiments a first of a plurality of the system information blocks comprises said coverage enhanced mode indicator bit.

An alternative location for the coverage enhanced mode is in the system information blocks. In this regard, a plurality of system information blocks are sent and the first system information block contains scheduling information that is required for decoding the other system information block(s). Placing the coverage enhanced mode indicator in the first system information block makes it more likely that it can be decoded, as the user equipment will not need to successfully decode another system information block first. Furthermore, as this system information block is received before the others, then placing the coverage enhanced mode indicator in this block allows it to be decoded earlier in the hand shake connection process than were it to be in another of the system information blocks.

In some embodiments, said coverage enhanced mode indicator is located at a predetermined position in one of said master information block and said first of said system information blocks.

Where the coverage enhanced mode indicator is a single bit, in order for it to be decoded it should be located at a predetermined position within the particular block.

In some embodiments, the coverage enhanced mode indicator is located in a paging message paged to user equipment.

Another way that the network node communicates with user equipment not currently connected is by using paging messages, thus, it may be advantageous to transmit the coverage enhanced mode indicator to the user equipment within such a message. In some embodiments the coverage enhanced mode indicator is provided only in the paging message while in others it is provided only in one of the MIB or first SIB. In other embodiments it is provided in one of the MIB and first SIB and additionally in a paging message, the paging message being used to indicate to the user equipment any change in coverage enhanced mode at the network node.

In some embodiments the network node transmits a paging message to said user equipment indicating a change of mode of said network node, wherein when said change of mode comprises switching into or out off said coverage enhanced mode said paging information indicates said change.

As noted previously, the network node will be in coverage enhanced mode at some times and not at others and, thus, this information maybe transmitted to the user equipment on connection, but this information may change and therefore it may be advantageous to transmit this updated information later, such that the user equipment is kept aware of the mode of operation of the network node. A paging message is a convenient way of transmitting this information. In some cases, the information may only be transmitted via a paging message and the user equipment may not know on connection the status of the network node, but will receive the status later when it receives a paging message.

In this regard, changes in information in either the system or master information blocks will trigger a paging message to be sent to the user equipment. Where the coverage enhanced mode indicator is broadcasts in one of the system or master information blocks, this paging message can be used to indicate to the user equipment that the coverage enhanced mode has changed. It is advantageous if information on the actual change in the indicator value is transmitted.

In some embodiments, when said coverage enhanced mode is turning off said indication comprises an indication of a time when said coverage enhanced mode is to turn off.

Where the paging message is used to indicate a change in the coverage enhanced mode and that change is the coverage enhanced mode turning off, it may be transmitted in advance of this happening, along with a time when this will occur. This will allow the user equipment to know before the coverage enhanced mode turns off that it is about to turn off and to act accordingly.

In some embodiments, the method comprises repeatedly transmitting said paging message over a plurality of discontinuous received cycles.

In order for user equipment in idle mode or in an area of high attenuation to successfully receive a paging message it is advantageous if the paging message is repeatedly transmitted over a plurality of discontinuous received cycle time periods. This should allow user equipment in idle mode to receive this information. Although this is particularly convenient for indicating when the coverage enhanced mode is to turn on, it can also be used to indicate when it is to turn off, as a user equipment that is about to try and connect may receive this information and decide to try and connect later.

In some embodiments, the method comprises switching from said non coverage enhanced mode of operation to said coverage enhanced mode of operation and remaining in said coverage enhanced mode of operation for longer than a predetermined time period, said predetermined time period selected to be equal to a user equipment connection retry time period.

The user equipment connection retry time period may be a feature of how the system is configured and be stored within the network node. Alternatively, it may vary and be signalled to the network node by the user equipment itself. In any case if the network node remains in coverage enhanced mode for longer than this period then a user equipment that has tried to connect just before the coverage enhanced mode is turned on, should catch the coverage enhanced mode on its next attempt.

In some embodiments, the method comprises switching from said non coverage enhanced mode of operation to said coverage enhanced mode of operation at least one predetermined time.

A further way of improving the chance of a user equipment that requires coverage enhanced mode accessing the network at a suitable time is to have at least one predetermined time at which the network node switches to the enhanced coverage node. This predetermined time(s) may be configured in the system or it may be signalled to the user equipment. If the user equipment is aware of the predetermined time then it can switch to active mode and attempt a connection at this time if it requires access to the network when the time arrives.

A second aspect of the present invention provides a network node for providing network connection information to a user equipment for connecting to a wireless communication network, said wireless communication network being configured to support communication with said user equipment according to a coverage enhanced communication mode which utilises repetition of some messages to increase coverage, and according to a non coverage enhanced mode where said some messages are not repeated said network node comprising: information broadcast circuitry for broadcasting a master information block comprising information regarding the network and system information blocks comprising information on how to attach to the network; said network node being operable to indicate a current mode of operation by signalling to user equipment that is not currently connected to said network, a coverage enhanced mode indicator indicating to said user equipment whether said network node is currently operating in said coverage enhanced mode or not.

A third aspect of the present invention provides a method performed by a user equipment for acquiring information for connecting to a wireless communication network, said wireless communication network being configured to support communication with said user equipment according to a coverage enhanced communication mode which utilises repetition of some messaging to increase coverage, and according to a non-coverage enhanced mode where said some messaging is not repeated, said method comprising: when in a non-connected mode, receiving a coverage enhanced mode indicator indicating whether said network node is currently operating in said coverage enhanced mode or not; and switching from an active mode to a dormant mode when said coverage enhanced mode indicator indicates that said network node is not currently operating in said coverage enhanced mode.

Where a network only supports coverage enhanced modes at certain times, the user equipment that is currently in idle mode and that requires the coverage enhanced mode to exchange data can, on receiving the coverage enhanced mode indicator, determine whether coverage enhanced mode is currently supported by the network node and if not then it can switch from an active mode to a dormant mode. The dormant mode is a mode in which the user equipment is not connected to the network and is not actively trying to connect. This mode is generally a lower power mode than the active mode and, as such, the battery of the device where it is battery powered is not used unduly. It should be noted that although in the dormant mode the user equipment will be using less power in the circuits that are used to communicate with the wireless network, it may be performing other tasks that consume power and therefore it may not always consume less power overall.

In some embodiments, the method comprises the further step of receiving information from said network node, said information comprising a master information block comprising information regarding the network, and at least one system information block comprising information on how to attach to the network.

When connecting to the network, the user equipment will receive a master information block and at least one system information block. The coverage enhanced mode indicator maybe in the master information block or the first system information block and may be a single bit located in a predetermined location, making it straightforward for the user equipment to receive and decode this signal. The coverage enhanced mode indicator may also be received in a paging message.

In some embodiments, the method further comprises remaining in said dormant mode during a predetermined user equipment connection retry time period and switching to said active mode and performing said receiving steps in response to expiry of said predetermined user equipment connection retry time period.

User equipment may be configured to remain in a dormant mode for a predetermined user equipment connection retry time period and to switch to the active mode after this time period. It may be convenient if the network node is configured to remain in the coverage enhanced mode for a period that is longer than the user equipment connection retry time period, such that if the user equipment is dormant at the beginning of this time period it will not be dormant at the end, allowing the user equipment to not miss this coverage enhanced mode period.

The connection retry time period should be known by both the network node and the user equipment in order for this to work. The network node may transmit this information to the user equipment.

In some embodiments, the method comprises a further step of said user equipment in said active mode receiving a paging message indicating that said network node is switching to said non coverage enhanced mode, said user equipment responding to said paging message by switching to said dormant mode.

In some cases, the indication that the network node is switching to the non-coverage enhanced mode may be signalled to the user equipment and the user equipment may receive this and switch to the dormant mode.

In some embodiments, when the user equipment is in the dormant mode it may also receive a paging message indicating that the network node is switching to the coverage enhanced mode. In such a case, if the user equipment has a message to send to the network then it can switch to its active mode at this point. If, however, it does not currently need to communicate with the network then it will stay in the dormant state.

In some embodiments, the method comprises following receipt of said coverage enhanced mode indicator indicating said network node is operating in said coverage enhanced mode, starting a timer; and during a predetermined time trying to receive and decode a set of a plurality of system information blocks transmitted by said network node and if after said predetermined time has elapsed said plurality of system information blocks have not been successfully decoded switching to said dormant mode.

It maybe convenient to limit the time that the user equipment tries to connect to a network as the network may not be in coverage enhanced mode even though the user equipment may not be aware of this. Thus, it may be convenient to set a timer on starting to try to connect and if it is unsuccessful within a predetermined period to switch to dormant mode and try again later.

A fourth aspect of the present invention provides a user equipment for communicating via a wireless communication network, said wireless communication network being configured to support communication with said user equipment according to a coverage enhanced communication mode which utilises repetition of some messaging to increase coverage, and according to a non coverage enhanced mode where said some messaging is not repeated, said use equipment comprising:
information receiving circuitry operable to receive a coverage enhanced mode indicator indicating whether said network node is currently operating in said coverage enhanced mode or not; and control circuitry configured to switch said user equipment from an active mode to a dormant mode when said received coverage enhanced mode indicator indicates that said network node is not currently operating in said coverage enhanced mode, in a signal that is transmitted to user equipment that is not currently connected to said network.

A fifth aspect of the present invention provides a computer program configured to control a data processing apparatus to perform a method according to a first aspect or a third aspect of the present invention.

In some embodiments the coverage enhanced indicator is a simple indicator of the mode within one of the first system information block or master information block and does not provide an indication of start or end times of the coverage enhanced mode or non-coverage enhanced mode, while in other alternative embodiments the coverage enhanced indicator is a pattern that includes this information.

A first technique provides a method of controlling user equipment operation in a wireless communications network configured to support communication with the user equipment according to a communication mode which utilises repetition of messaging to ensure the user equipment can communicate with the network, wherein the communication mode is implemented at selected times during operation of network; the method comprising: determining an end time at which a current communication mode of operation is due to end and a start time at which a future communication mode of operation is due to begin; and communicating an indication of the end time and the start time to the user equipment during the current communication mode of operation.

The first technique recognises that one issue which may occur in the deployment of user equipment within a network is that they can become deployed in areas suffering from very high attenuation. Such high attenuation can cause user equipment to be unable to decode downlink information which can be essential for being able to access appropriate downlink traffic. If deployed in such areas of high attenuation, user equipment may be effectively unable to receive traffic from a base station.

The first technique recognises that techniques for providing information to user equipment in high attenuation deployments exist. The first technique also recognises that there is an emerging class of user equipment (such as machine type communication devices which may be used on Smart meters) which tend to be immobile once installed and thus, although mobile user equipment may simply find it inconvenient when located in high attenuation areas and yet have restored coverage when the user equipment moves to a lower attenuation, such stationary user equipment may be permanently located in a region of high attenuation and no network coverage may be provided for those users.

Techniques for ensuring some kind of communication can occur for user equipment located in high attenuation areas typically comprise, for example, implementing a different communication technique at the base station; for example, large numbers of repetitions of transmissions of a single message such that user equipment located in a high attenuation area has an opportunity to receive and re-compile that message. That is to say, by repeating transmission of a message, user equipment may be operable to combine successive repetitions in order to increase the likelihood that a message can be decoded. Such repetitions may be used to increase coverage provided in areas of high attenuation.

A Machine Type Communication (MTC) device is a user equipment used by machine for a specific operation. One example of such an MTC device would be a Smart utility meter. As described, some such devices may be located in areas of particularly high attenuation; for example, in basements which suffer from high penetration loss. It can therefore be difficult for those MTC devices to communicate with a network. Coverage enhancement techniques aim to extend coverage provided to such MTC user equipment by approximately 15 dB. Such coverage enhanced user equipment are referred to as CE-MTC UE (Coverage Enhanced MTC UE). In order to extend coverage to such user equipment, the network must be operable without extending total transmission power of a base station (for example, an eNode B) or the total transmission power of user equipment. Repetition has been identified as the main method. That is to say, repetition represents a means to extend coverage to user equipment in a particularly high attenuation area. The number ofrequired repetitions is significant and maybe in the hundreds. Such a level of repetition has significant impact on the spectral efficiency of a network. It will be understood that a network has to provide repeat SIBs (System Information Broadcast messages) and reserve additional RACH resources when operating in coverage extension mode.

The first technique recognises that techniques used to communicate with high attenuation user equipment may only be deployed at certain times. That is to say, constant support of user equipment in high attenuation areas may be impossible or represent highly inefficient network usage.

The first technique recognises that a network will not always be in a coverage extension or coverage enhancement mode and that it can be beneficial for a network to only operate in coverage enhanced mode at periods of low user traffic. The first technique recognises that user equipment which might otherwise receive no signal and only receive signal during coverage enhancement periods may save power by operating in a dormant or powered-off mode when a network is not operating in a coverage enhanced mode.

The first technique recognises that an appropriately selected user equipment permanently located in a location experiencing high attenuation may save power by going into semi-power-off or dormant mode when the network is operating in a normal mode of operation. In other words, it is expected that a network will only be operable to properly service coverage enhanced MTC user equipment using non-busy hours, for example, in the middle of the night, to avoid impacting upon service offered to normal user equipment. As a result, a base station (for example, an eNode B) may operate in two modes: normal mode and coverage enhanced mode. Techniques and techniques may provide a means for a network and user equipment to switch between normal and coverage enhanced modes.

In one technique, the indication of the end time and the start time comprises an indication of a repeated periodic pattern of the communication mode of operation. Accordingly, the modes of operation implemented to support MTC-UE in high attenuation locations may be substantially periodic. In particular, an enhanced mode of operation may be implemented at the same low-activity time each day, for the same duration each day. Accordingly, an indication of start and end time may, for example, comprise an indication of an on period and an indication of an elapsed time between on periods.

In one technique, the start time at which a future communication mode of operation is due to begin comprises a start time of the next communication mode of operation. In some techniques, a network control node may only be able to determine its intended next intended "on" period, rather than operating according to a known periodic pattern. Accordingly, it may be appropriate to provide user equipment in high attenuation areas with an indication of the next time that it is likely to be able to establish communication with a network, so that it can take appropriate action to be ready to communicate at that time.

In one alternative, communicating an indication of the end time and the start time to the user equipment comprises transmission of the start and end time as a system information block (SIB) message. In another alternative, a MIB message may be used to convey the start and end time to user equipment. Accordingly, by providing a suitable broadcast message, all user equipment operating to communicate with the network can be informed of another time at which communication with a network will be possible. Other alternatives comprise transmitting the coverage enhanced indicator as a simple indicator of the mode within these blocks without indicating start and end times. Accordingly, since it is expected that CE-MTC user equipment are likely to be turned off or in a dormant state between operational periods, those user equipment would typically need to operate to achieve synchronisation when first connecting to a network. In order to achieve such synchronisation, those user equipment must read the MIB and SIB when they first wake up during a period in which an eNode B operates in coverage enhancement mode. An updated coverage enhancement pattern may therefore be obtained whenever user equipment first enters operation during a coverage enhancement period. That pattern may be communicated to user equipment by updating a SIB or MIB. According to some techniques and techniques, it will be appreciated that a selected coverage enhancement pattern indicated in a SIB or MIB would be unlikely to change during a coverage enhancement period or mode of operation.

In one technique, communicating an indication of the end time and the start time to user equipment comprises transmission of the start and end time in dedicated messaging to the user equipment. Such an technique may allow a network to schedule some user equipment to operate using a different coverage enhancement period. For example, an eNode B may be operable to schedule half the user equipment operating in coverage enhancement mode to operate in every coverage enhanced period, whilst another half of those user equipment may operate in every other coverage enhancement period. A direct message sent to user equipment may override a coverage enhancement pattern message broadcast in a SIB or MIB.

A second technique provides a computer program product operable, when executed on a computer, to perform the method of the first technique.

A third technique provides a network control node operable to control user equipment operation in a wireless communications network configured to support communication with user equipment according to a communication mode which utilises repetition of messaging to ensure user equipment can communicate with the network, wherein the communication mode is implemented at selected times during operation of the network; the network control node comprising: mode of operation determination logic operable to determine an end time at which a current communication mode of operation is due to end and a start time at which a future communication mode of operation is due to begin; and communication logic operable to communicate an indication of the end time and the start time to the user equipment during the current communication mode of operation.

In one technique, the indication of the end time and the start time comprises an indication of a repeated periodic pattern of the communication mode of operation.

In one technique, the start time at which a future communication mode of operation is due to begin comprises a start time of the next communication mode of operation.

In one technique, the communication logic is operable to communicate an indication of the end time and the start time to the user equipment by transmitting the start and end time as a system information block (SIB) message.

In one technique, the communication logic is operable to communicate an indication of the end time and the start time to the user equipment by transmitting the start and end time in dedicated messaging to the user equipment.

A fourth technique provides a method of controlling a sleep period for user equipment operation in a wireless communications network configured to support communication with user equipment according to a communication mode which utilises repetition of messaging to ensure user equipment can communicate with the network, wherein the communication mode is implemented at selected times during operation of the network; the method comprising: determining an indication of an end time at which a current communication mode of operation is due to end and an indication of a start time at which a future communication mode of operation is due to begin; and implementing a sleep period to occur between the end time and the start time.

In one technique, determining comprises: looking up a preconfigured start time and implementing a sleep period to occur between a current time and the preconfigured start time. Accordingly, an initial coverage enhancement pattern can be configured when CE-MTC user equipment is first deployed within a network. Such an technique may allow for coverage enhancement MTC user equipment to wake up for the first time in a manner which assures that it may be able to communicate with an eNode B during a coverage enhancement period of operation. According to one technique, a fallback coverage enhancement pattern can be defined for each CE-MTC user equipment. It is possible that user equipment in highly attenuated areas may miss a coverage enhancement period (for example, due to a battery failure or a power cut) and therefore miss information relating to a following scheduled coverage extension period. In such an instance, a fallback coverage enhancement period may be utilised such that coverage enhanced MTC user equipment may be operable to re-sync themselves back and thus find an updated coverage enhancement period. In such a scenario, an eNode B would typically be configured to have knowledge of such a scheduled fallback coverage enhanced period. The fallback period may, for example, comprise a specific period in a day. In some techniques, a fallback coverage enhancement period may be an initial coverage enhancement period set in accordance with alternative techniques.

In one technique, determining comprises: receiving a broadcast message including an indication of the end time and the start time.

In one technique, determining comprises: receiving a dedicated message including an indication of the end time and the start time.

According to further techniques, user equipment may be operable to continuously monitor SIBs to identify the start of a coverage enhanced mode. Such a scenario may allow for shorter and flexible delays to allow for communication with coverage enhanced MTC devices. Such a scenario may be used for user equipment that do not have particular knowledge of a coverage enhanced pattern, or in respect of user equipment which have no requirement for additional battery saving.

In one technique, the user equipment is operable to initiate wake up a pseudorandom time period after the start time. According to some techniques, wake up of a coverage enhanced MTC user equipment may be set such that it occurs a pseudorandom period after the start of a known coverage enhancement period of operation. Such an implementation may avoid all coverage enhanced MTC devices waking up at the same time and attempting to attach to the network at the same time, thereby overloading the network.

A fifth technique provides a computer program product operable, when executed on a computer, to perform the method of the fourth technique.

A sixth technique provides user equipment operable to control a sleep period of the user equipment in a wireless communications network configured to support communication with the user equipment according to a communication mode which utilises repetition of messaging to ensure the user equipment can communicate with the network, wherein the communication mode is implemented at selected times during operation of the network; the user equipment comprises: determination logic operable to receive an indication of an end time at which a current communication mode of operation is due to end and an indication of a start time at which a future communication mode of operation is due to begin; and
sleep logic operable to implement a sleep period to occur between said end time and said start time.

In one technique, determining comprises: looking up a preconfigured start time and implementing a sleep period to occur between a current time and the preconfigured start time.

In one technique, determining comprises: receiving a broadcast message including an indication of the end time and the start time.

In one technique, determining comprises: receiving a dedicated message including an indication of the end time and the start time.

In one technique, the user equipment is operable to initiate wake up a pseudorandom time period after the start time.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a network comprising a network node and a user equipment according to an embodiment of the present invention;
Figure 2 shows a flow diagram illustrating steps in a method performed by a network node to indicate coverage enhanced or non-coverage enhanced mode to a user equipment as it switched between the two;
Figure 3 shows a flow diagram illustrating steps in a method performed by a network node to indicate coverage enhanced or non-coverage enhanced mode to a user equipment;
Figure 4 shows a flow diagram illustrating steps in a method performed by a user equipment according to an embodiment of the present invention;
Figure 5 illustrates the time flow of a user equipment connecting to a network operating in coverage enhanced mode;
Figure 6 illustrates schematically a network deployment capable of coverage enhancement;
Figure 7 illustrates schematically operation of a base station in which coverage enhancement mode is possible; and
Figure 8 and 9 illustrate schematically coverage enhancement mode as implemented by a base station (for example, an eNode B) according to one technique.

### DESCRIPTION OF THE EMBODIMENTS

Before discussing the embodiments in any more detail, first an overview will be provided. As mentioned above, one difficulty with deploying some types of user equipment is that they are located in areas which suffer from high losses; for example, high penetration losses due to their position within a building. Therefore, it is difficult for those user equipment to communicate with a network. One example of such user equipment is a Machine Type Communication device such as, for example, a Smart utility meter. Some such Smart utility meters may be located in basements or other areas which suffer from high attenuation of radio signals. It will be understood that these type of user equipment are substantially static and are unlikely to move to a region suffering from less attenuation. Some of those Smart utility meters operate in such a manner that it is desired to extend the coverage of those devices by a particular amount, say 15 dB. According to the operation of some networks, a base station may be operable to perform a special mode of operation perhaps during periods of low network traffic. That special mode of operation, known as coverage enhancement, is such that messages sent to users in regions of high attenuation are repeated a number of times. In particular, some messages may be repeated a number of times within a radio frame of a downlink transmission channel. Repeating messaging enables energy and information from successive repetitions to be combined in order to improve the likelihood of user equipment being able to decode information contained in such a message. However, in order to achieve coverage in very high penetration loss areas, the extent of repetition within a radio frame may result in virtually the whole resource of the radio frame over a 40 ms window being required to be used for transmissions of, for example, a master information block, particularly for a narrow bandwidth carrier.

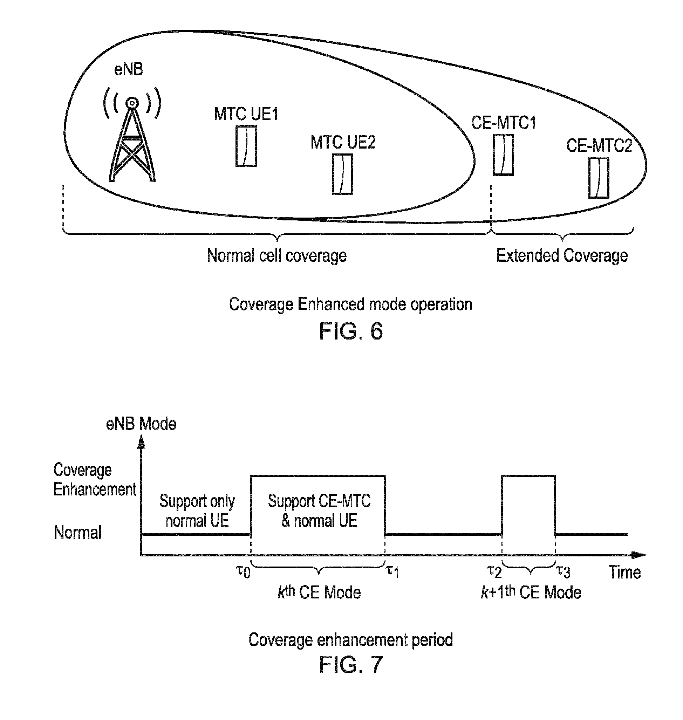

Figure 6 illustrates schematically a base station, in this case an eNode B, which is capable of operating a normal coverage mode and so-called "coverage enhancement" mode. A number of Machine Type Communication user equipment are illustrated which exist within the coverage region of the eNode B. It will be seen that two of those Machine Type Communication user equipment, MTC UE1 and MTC UE2, operate within a region of normal cell coverage provided by the eNode B. Two further user equipment: CE-MTC1 and CE-MTC2, are only able to communicate with the eNode B when it operates in coverage enhanced mode. That is to say, the radio condition of the location where those user equipment are situated is such that those user equipment can only successfully receive messaging from the eNode B when a repetitive mode of communication is implemented at the eNode B. It will be understood that MTC UE1 and MTC UE2 may be served by the eNode B at all times whilst CE-MTC1 and CE-MTC2 may only operate effectively when the eNode B is operating in coverage enhanced mode.

Aspects and embodiments recognise that an eNode B or other network access node may operate in two modes. Firstly, an eNode B may operate in a normal mode. That mode will be understood to be essentially legacy eNode B operation, such that there is no coverage enhancement feature for MTC devices. In this mode, the eNode B can only effectively support normal user equipment which fall within normal radio coverage. Secondly, an eNode B may operate in coverage enhancement mode (CE mode). According to such a mode, the coverage for physical channels required for coverage enhanced MTC user equipment can be enhanced. Heavy repetition is performed on those physical channels. In such a mode, the eNode B may support both normal user equipment and coverage enhanced MTC user equipment.

Such coverage enhanced user equipment are referred to as CE-MTC UE (Coverage Enhanced MTC UE). In order to extend coverage to such user equipment, the network should be operable preferably without extending total transmission power of a base station (for example, an eNode B) or the total transmission power of user equipment. Repetition has been identified as the main method. That is to say, repetition represents a means to extend coverage to user equipment in a particularly high attenuation area. The number of required repetitions is significant and may be in the hundreds. Such a level of repetition has significant impact on the spectral efficiency of a network.

In order for the devices that require enhanced or extended coverage to be aware of the current operating conditions of the network node an indication may be provided of its current mode of operation. This may be provided in the MIB or in the first of the SIBs. In the MIB the indication uses one of the reserved bits in the current MIB format. Legacy UE will ignore these reserved bits whilst CE-MTC UE would read this one bit in the reserved bits to determine the operational status of coverage enhanced mode. This aspect recognizes that CE-MTC UE is able to decode PBCH physical broadcast channel (at high BLER, block error rate) without any additional repetitions and hence, putting this said indicator in the MIB (carried by the PBCH) would enable the CE-MTC UE to determine whether the eNB is operating in coverage enhanced mode and whether the CE-MTC UE needs to continue to decode the SIB or it can move into power saving mode.

It should be appreciated that the current reserved bits are set to "0". Therefore, the said indication bit can be set to "1" to indicate that the eNB is operating in coverage enhanced mode and it is set to "0" if the eNB is not operating in coverage enhanced mode.

In an embodiment, a timer *T_{SLEEP}* is defined where the CE-MTC would back off after detecting the PBCH and realising that the eNB is not operating in coverage enhanced mode. *T_{SLEEP}* is started after decoding the PBCH (physical broadcast channel) and upon expiry of this timer, the CE-MTC UE will try to re-obtain synchronization and read the PBCH to determine if the eNB is operating in coverage enhanced mode. This timer would be beneficial for the eNB to schedule its coverage enhanced mode operation, e.g. if the *T_{SLEEP}* = 10 mins, then the eNB can ensure that the coverage enhanced mode should for operate more than 10 minutes in order for CE-MTC UE to wake in the period whether coverage enhanced mode is operating.

In another embodiment a fix starting time point where the network can operate in coverage enhanced mode is introduced. The CE-MTC UE just has to wake up during this time to find out whether the eNB is operating in coverage enhanced mode. If not, the CE-MTC UE will go to sleep until the next starting time. This starting time can be provided to the UE when the UE first attached to the network via a potential coverage enhanced eNB.

In the prior art, when there is a change to the broadcast information, the network would page the UEs to indicate that a change has occurred. In another embodiment, when the eNB turns off coverage enhanced mode, it will send a paging to the CE-MTC UE indicating that coverage enhanced mode is turning off. Here instead of requiring the CE-MTC UE to re-read the MIB, the paging message itself would indicate when the coverage enhanced mode is turned off (e.g. which system frame number. SFN).

In another embodiment, it is assumed that the UE is attached to the network after the first power on and kept itself in a power saving mode (e.g. long DRX or special dormat state for power saving) after the attach. Where it had read the MIB and the other SIBs during the last Attach procedure to the network, it would know at least the paging configuration for enhanced coverage mode. If an eNB decides to operate in coverage enhanced mode, it can page the CE-MTC UE over 1 or more paging DRX period to ensure that the CE-MTC UE is paged. Here instead of requiring the CE-MTC UE to read the MIB, the paging message itself would indicate when the coverage enhanced mode is turned on (e.g. which SFN, system frame number).

In another embodiment, after reading the MIB and determining that the eNB has turned on coverage enhanced mode, the CE-MTC UE starts a timer *T_{SIB}* where it reads the SIB. When *T_{SIB}* expires and the CE-MTC UE has not been able to obtain the SIB, the CE-MTC UE will move into power saving or dormant mode, and start timer *T_{SLEEP}.* This recognizes that the eNB can switch off coverage enhanced mode after the CE-MTC UE has successfully detected PBCH but has not read the SIB (and obtaining the necessary information to read paging).

In the current system the reserved field of the PBCH contains 10 (unused) bits. In this example, the 1^{st} bit of these 10 reserved bits is used as the CE-mode indication bit, which is to indicate whether coverage enhanced mode is turned on or off, i.e.:
1) "1000000000" of the reserved bits indicate that coverage enhanced mode is turned on (i.e. the 1^{st} bit is set to "1")
2) "0000000000" of the reserved bits indicate that coverage enhanced mode is turned off "i.e. the 1^{st} bit is set to "0")

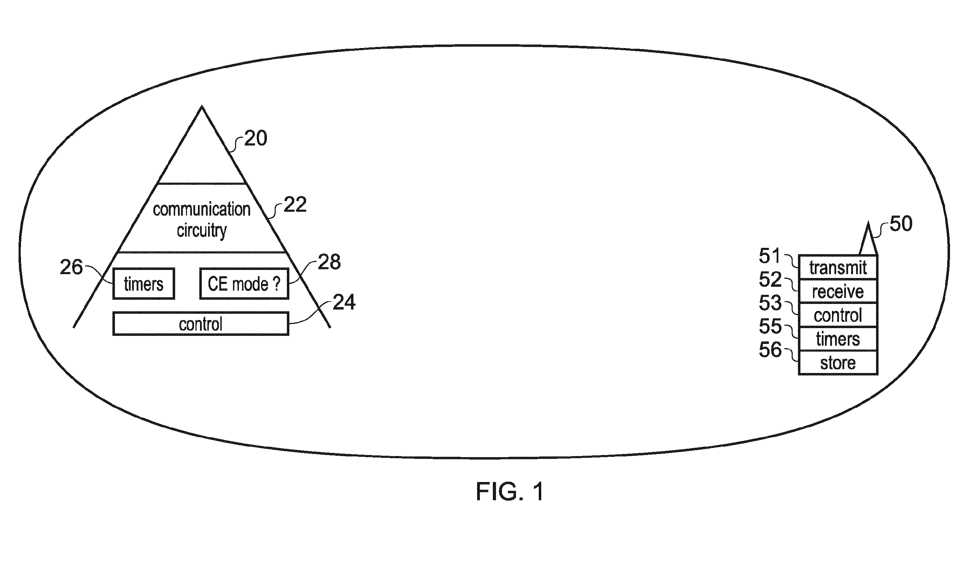

Figure 1 shows a wireless communication network according to an embodiment of the present invention. The wireless communication network is formed of a plurality of base stations which provide radio coverage in local areas termed cells and are controlled by a call network not shown. Each network node or base station 20 has communication circuitry 22 for transmitting, receiving and broadcasting wireless signals. The transmission and reception of these signals is controlled by control circuitry 24. There is also a timer 26 and a data store 28 for storing information regarding the current operating conditions of the network and the user equipment within range, and also for storing an indication as to whether or not the base station 20 is currently operating in coverage enhanced mode or not. Coverage enhanced mode is a mode where the base station will repeatedly transmit messages, thereby making it more likely that user equipment 50 that are located in areas of high attenuation can decode signals from the base station 20.

User equipment 50 located within the cell of base station 20 will receive signals from it using receive circuitry 52 and will transmit signals using transmit circuitry 51. This circuitry is controlled by control circuitry 53 and there is a timer 55 and a data store 56.

User equipment 50 is configured to operate in coverage enhanced mode and, thus, will determine from received signals whether or not the base station 20 is currently operating in coverage enhanced mode. It will do this by decoding an indicator transmitted from the base station which will indicate coverage enhanced mode or not. In some embodiments this indicator is transmitted at a predetermined location in a master information block or, in other embodiments, it is transmitted in a system information block. In the latter case, it will appear in the first system information block which includes the scheduling information for decoding other system information block(s).

In other embodiments it will simply be sent in a paging message which the network node will issue when switching between modes. In some cases, the indicator will be sent in one of the information blocks as well as in paging information, such that when trying to connect to the network the user equipment can determine, whether or not the base station is currently in coverage enhanced mode from the indicator in the MIB or first SIB. If it is not, it can cease trying to connect. If it is, it will continue to try. In this regard, it may still be unsuccessful as the base station may switch out of coverage enhanced mode while it is trying. Thus, in some embodiments, timer 55 is set for a predetermined time and the attempt to connect to the network will only be performed during that time period. If at the end of the time period the connection attempt is unsuccessful then the user equipment 50 will enter a dormant mode and will no longer try to connect. It can at this point set a further timer which times a retry connection time interval which determines how long it will stay in the dormant mode for before attempting to connect again.

If the user equipment 50 determines that the base station is in the coverage enhanced mode it will connect to the network and will repeatedly transmit any messages such that the base station can accumulate the information and decode them. Furthermore, any messages sent from the base station will be sent repeatedly such that the user equipment can accumulate them and decode them. When it has successfully sent its messages it may switch to dormant mode.

When it wishes to send another message, in some cases it will try and connect and try to detect the coverage enhanced mode indicator. In other embodiments, it may have a predetermined time stored in data store 56 and will know that at this predetermined time the base station will be in coverage enhanced mode and it will become active at this time if it has a message to send. Alternatively, if it tries to connect and determines that the base station is currently not in coverage enhanced mode it may set timer 55 for the retry connection time interval and will retry at the end of that. In this regard, in some embodiments, the base station and user equipment both store the retry connection time period and when the base station switches to the connection enhanced mode it stays there for a time period that is longer than the retry connection time period such that the user equipment will not stay dormant during the whole of the time period during which the base station is in coverage enhanced mode.

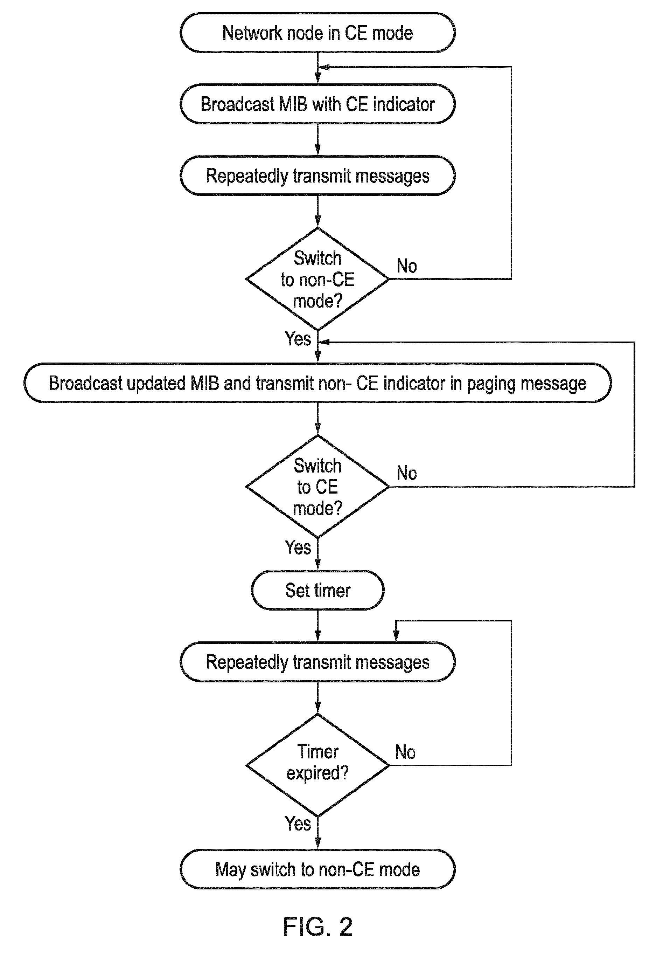

Figure 2 shows a flow diagram illustrating steps in a method performed by a network node according to an embodiment of the present invention. In this example, the network node is initially in coverage enhanced mode and broadcasts a master information block with a CE indicator in it. Any messages that it transmits it will transmit repeatedly, thereby providing the coverage enhancement. At a certain point it will switch to the non-coverage enhanced mode and at this point it will broadcast an updated master information block with a non-CE indicator in it and it may also transmit a non-CE indicator in a paging message. In this regard, when the master information block of a network is updated then a paging message is often sent to user equipment notifying them of this fact. It is advantageous in embodiments of the invention if this paging message also includes the indication of the coverage enhanced mode within it, such that the user equipment can determine directly from the paging message whether or not the base station is currently in coverage enhanced mode.

The network node will then operate in non-coverage enhanced mode, where messages are not repeatedly sent and therefore the network node can operate more efficiently. At a certain point it will switch to the coverage enhanced mode again In some embodiments it will at this point set a timer and will repeatedly transmit any messages it sends. When the timer has expired it may switch back to the non-coverage enhanced mode. In this regard, the timer is set to run for a time period that is longer than the connection retry time of a user equipment in the system. As the network node remains in the coverage enhanced mode for at least this period, the user equipment will not miss this coverage enhanced mode period when trying to reconnect.

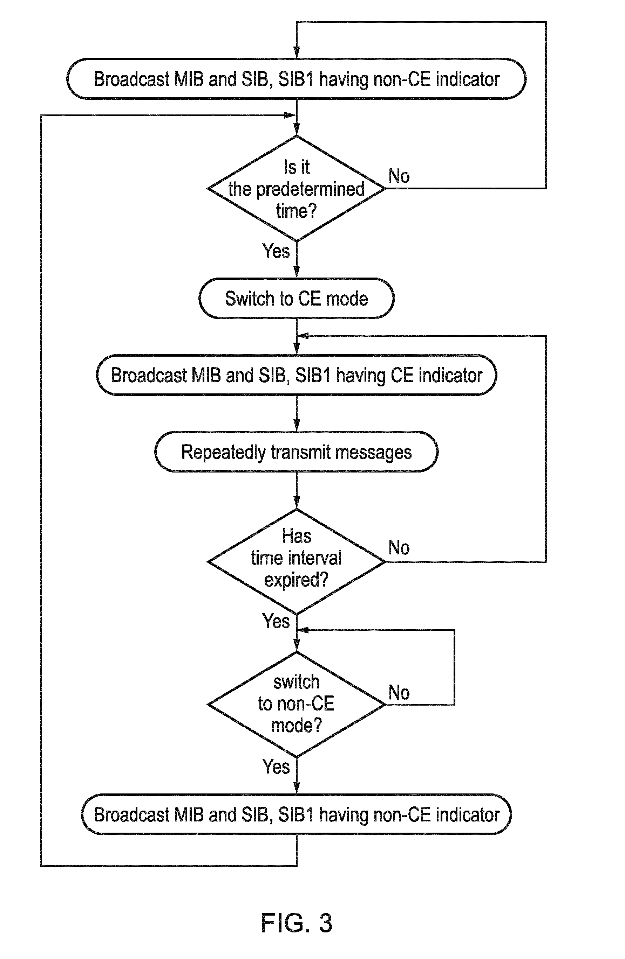

A further method performed by the network node is shown in Figure 3. Initially, the network node broadcasts master information blocks and system information blocks. In this embodiment, the first system information block has the coverage enhanced indicator within it. Initially, the network node is in the non-coverage enhanced mode and therefore it transmits a non-coverage enhanced indicator within this first system information block. At a predetermined time, it will switch to the coverage enhanced mode and at this time it will broadcast the master information blocks and the system information blocks with the first system information block having a coverage enhanced indicator within it. At this point, it will operate in coverage enhanced mode and will repeatedly transmit messages. It will do this for at least as long as a time interval that is configured to be longer than the connection retry time interval of the user equipment. When the time interval has passed at a certain point it will switch to the non-coverage enhanced mode, and once it has switched to the non-coverage enhanced mode it will then broadcast master information blocks and system information blocks with the first system information block having a non-coverage enhanced indicator within it.

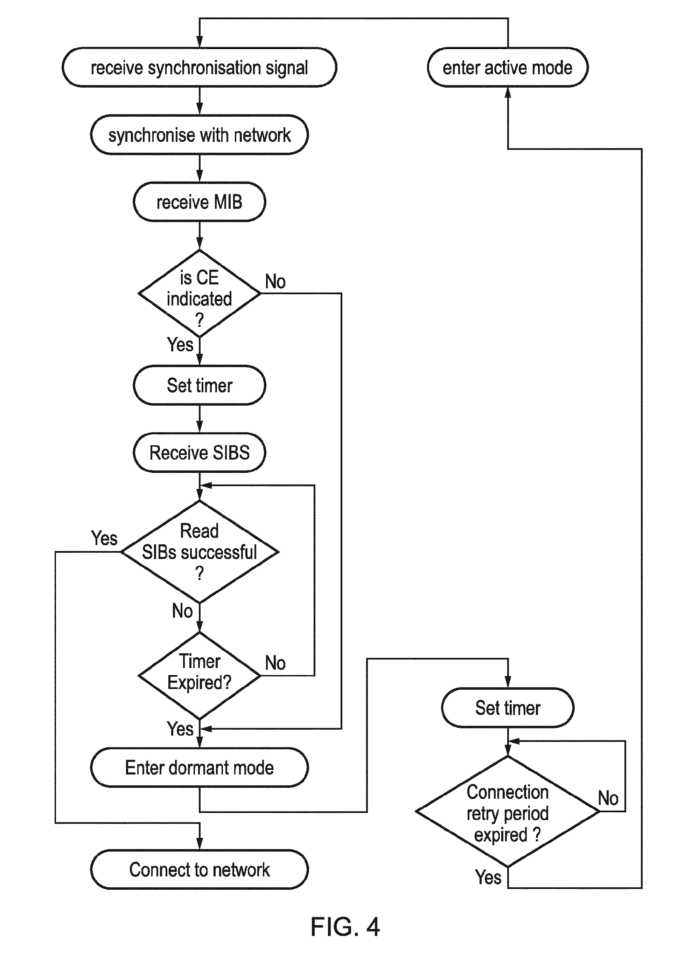

Figure 4 shows steps in a method performed by user equipment according to an embodiment of the present invention. The user equipment receives synchronisation signals and synchronises with the network. It then receives the master information block and determine whether or not coverage enhanced mode is indicated. If it is not, it enters a dormant mode. It will then set a timer and will stay in dormant mode for a connection retry time period and when this has expired it will enter the active mode and synchronise with the system again and look again at the master information block.

If coverage enhanced mode is indicated, then it will set a timer and will receive the system information blocks. It will then try and decode them. If during the time period indicated by the timer it has not been successful, then it will enter the dormant mode. If it is successful then it will connect to the network and will communicate with the network by repeatedly transmitting messages as it is operating in the coverage enhanced mode.

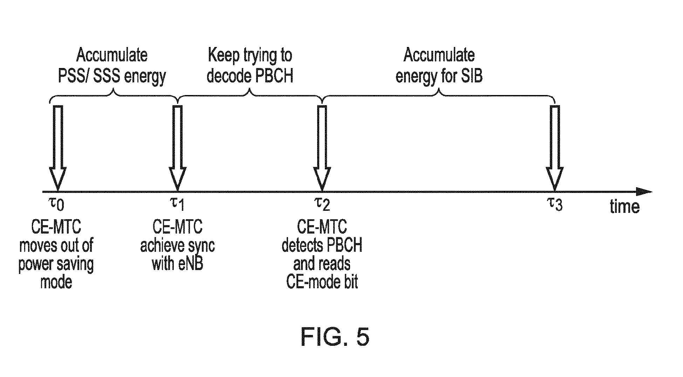

Figure 5 shows a time line of a CE-MTC UE when it tries to connect to the network. At time τ₀, the CE-MTC UE moves out of power saving mode (e.g. it is switched on) and it tries to detect PSS/ SSS to achieve synchronization by accumulation of PSS/ SSS energy.

At time τ₁, the CE-MTC UE achieves synchronization and attempts to decode the PBCH. The eNB decides not to operate in coverage enhanced mode and therefore will not repeat PBCH and will set the reserved bits to "0000000000". As described previously, the CE-MTC UE can still "keep trying" to decode the PBCH.

At time τ₂, the CE-MTC UE managed to decode the PBCH and checks the CE-mode indication bit. Since the eNB set this bit to "0", the CE-MTC UE stops trying to read the SIB and move into power saving mode. As per an embodiment, the CE-MTC UE would also start a timer *T_{SLEEP}* at time τ₂, where upon expiry of *T_{SLEEP}* the CE-MTC UE would re-attempt to connect to the network.

It should be appreciated that without the CE-mode indication bit in the MIB, the CE-MTC UE would continue to try to detect the SIB and would only be able to determine whether the eNB is operating in coverage enhanced mode when it realize that some essential IEs in the SIBs are not present. Examples of essential IEs are PRACH repetition level which needs to be broadcasted in the SIB. SIB is carried by the PDSCH which may require numerous repetitions in order to be detected, which would consume significant amount of battery power from the CE-MTC UE.

Embodiments further introduce a coverage enhancement pattern message which can operate to indicate a pattern of coverage enhancement to those user equipment which are coverage enhancement MTC user equipment. It is intended that the coverage enhancement pattern message can indicate to user equipment in the coverage enhancement zone when an eNode B is next likely or next intends to implement a coverage enhancement mode of operation and, thus, user equipment can sleep between periods where they are able to see a network, thus enabling user equipment to save battery power in between those periods of coverage enhancement operation by an eNode B.

In other words, a coverage enhancement pattern message may tell user equipment how long a coverage enhancement mode of operation may last and when the next coverage enhancement pattern period will begin.

Various means to implement such a coverage enhancement pattern message may be envisaged. According to one, the "coverage enhancement pattern" indicates a repeated periodicity of coverage enhancement and an indication of how long a base station may operate in coverage enhancement mode and how long in normal mode operation. In particular, the message may comprise an indication of the duration of a coverage enhancement period and a cycle relating to such a coverage enhancement period. According to some embodiments, an eNode B may be operable to switch between coverage enhancement and normal mode of operation according to the cycle indicated to user equipment.

A coverage enhancement pattern message may indicate the end of a current coverage enhancement mode and the start of the next coverage enhancement mode to be implemented by a base station.

Figure 7 illustrates schematically potential eNode B operation mode changes across a time period. According to Figure 7, the eNode B mode changes across a time period and two distinct coverage extension periods are shown. In those two distinct coverage enhancement periods the eNode B operates in coverage enhancement mode and in this case those periods are referred to as the kth and k+1th coverage enhancement periods. The kth CE period starts at time T0 and ends at time T1, whilst the k+1th CE period starts at a time T2 and ends at a time T3. In the illustrated embodiment, the coverage enhancement pattern message could, for example, indicates times T1 and T2. A coverage enhanced MTC user equipment operating in the kth CE mode period may therefore be operable to switch off or enter a dormant state after a time T1 and wake up in the region of time T2. Such operation may allow an eNode B a degree of flexibility when supporting coverage extension MTC user equipment. Furthermore, it may be such that an eNode B may be operable to delay entering a coverage enhancement operation period if it determines that it typically experiences heavy loading from normal user equipment on a particular day and set time T2 accordingly.

The coverage enhancement pattern may be broadcast in a SIB message. In some embodiments the coverage enhancement pattern may be broadcast in the MIB. Since it is expected that CE-MTC user equipment are likely to be turned off or in a dormant state, those user equipment would typically need to operate to achieve synchronisation when first connecting to a network. In order to achieve such synchronisation, those user equipment must read the MIB and SIB when they first wake up during a period in which an eNode B operates in coverage enhancement mode. An updated coverage enhancement pattern may therefore be obtained whenever user equipment first enters operation during a coverage enhancement period. That pattern may be communicated to user equipment by updating a SIB or MIB.

It will be appreciated that a selected coverage enhancement pattern indicated in a SIB or MIB would be unlikely to change during a coverage enhancement period or mode of operation.

A coverage enhancement pattern can be sent to user equipment using a dedicated message. Such an embodiment may allow a network to schedule some user equipment to operate using a different coverage enhancement period. For example, an eNode B may be operable to schedule half the user equipment operating in coverage enhancement mode to operate in every coverage enhanced period, whilst another half of those user equipment may operate in every other coverage enhancement period. A direct message sent to user equipment may override a coverage enhancement pattern message broadcast in a SIB or MIB.

An initial coverage enhancement pattern can be configured when CE-MTC user equipment is first deployed within a network. Such an embodiment may allow for coverage enhancement MTC user equipment to wake up for the first time in a manner which assures that it may be able to communicate with an eNode B during a coverage enhancement period of operation. According to one embodiment, a fallback coverage enhancement pattern can be defined for each CE-MTC user equipment. It is possible that user equipment in highly attenuated areas may miss a coverage enhancement period (for example, due to a battery failure or a power cut) and therefore miss information relating to a following scheduled coverage extension period. In such an instance, a fallback coverage enhancement period may be utilised such that coverage enhanced MTC user equipment may be operable to re-sync themselves back and thus find an updated coverage enhancement period. In such a scenario, an eNode B would typically be configured to have knowledge of such a scheduled fallback coverage enhanced period. The fallback period may, for example, comprise a specific period in a day. In some embodiments, a fallback coverage enhancement period may be an initial coverage enhancement period set in accordance with alternative embodiments.

User equipment may be operable to continuously monitor SIBs to identify the start of a coverage enhanced mode. Such a scenario may allow for shorter and flexible delays to allow for communication with coverage enhanced MTC devices. Such a scenario may be used for user equipment that do not have particular knowledge of a coverage enhanced pattern, or in respect of user equipment which have no requirement for additional battery saving.

According to some techniques, wake up of a coverage enhanced MTC user equipment may be set such that it occurs a pseudo random period after the start of a known coverage enhancement period of operation. Such an implementation may avoid all coverage enhanced MTC devices waking up at the same time and attempting to attach to the network at the same time, thereby overloading the network.

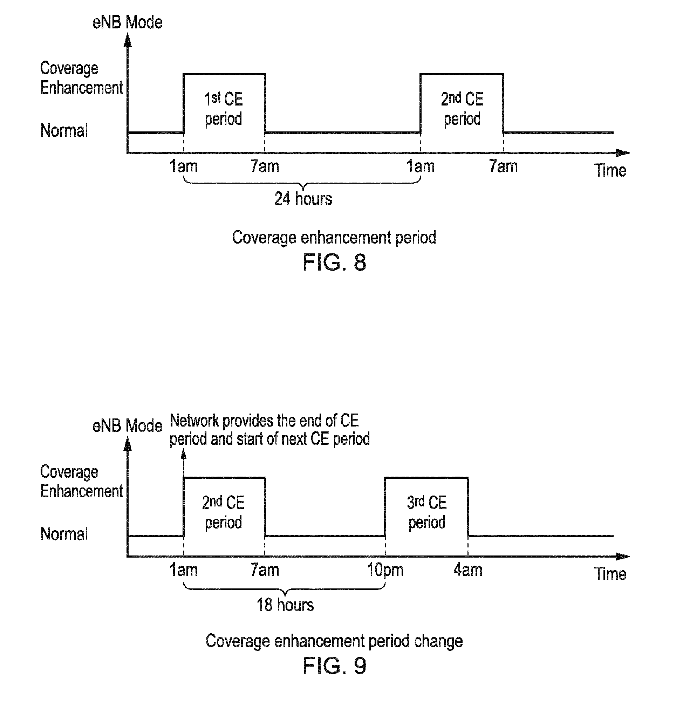

Figures 8 and 9 illustrate schematically example coverage enhancement patterns implemented by an eNode B such as that shown in the arrangement of Figure 6.

In one embodiment, a coverage enhanced pattern message may comprise five bits, as further defined below: three bits may be used to indicate a start time; for example, that start time may have a three hour step and the next coverage enhanced period may occur a minimum of three hours from time To; and two bits may be used to indicate a duration of a next coverage enhanced period, again in a three hour step with a minimum setting of three hours.

According to one example, a CE cycle may be set to 24 hours (ie, a bit value of 111) and the coverage enhanced pattern period may be set to six hours (ie, a bit value of 0 1). It will be understood that 000 or 00 means a minimum three hour start time and a three hour duration.

As shown in Figure 8, CE-MTC1 and CE-MTC2 maybe configured with an initial start time of 1.00 am. An eNode B may be operable to ensure that it supports coverage enhancement mode during that period. An appropriate coverage enhancement pattern is shown in Figure 8.

At the second coverage enhancement period as shown in Figure 8, an eNode B maybe operable to decide that it wishes to schedule a further or next coverage enhancement period earlier than 1.00 am. Thus, when the second coverage enhancement period starts the eNode B maybe operable to change its SIB value such that the next cycle is 18 hours away and lasts six hours.

Figure 9 shows the CE pattern after the second CE period; that is to say, the third CE period begins three hours earlier. It also shows schematically that an eNode B may be operable to provide information to user equipment about the change in coverage enhancement pattern.

The techniques described allow for synchronisation between eNode B and CE-MTC user equipment within a network. In particular, they may allow CE-MTC user equipment to wake up at the right time to connect to a network and receive coverage and yet save battery between those times when it can successfully communicate with the network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed by a network node of providing network connection information to a user equipment for connecting to a wireless communication network, said wireless communication network configured to support communication with said user equipment according to a coverage enhanced communication mode which utilises repetition of some messaging to increase coverage, and according to a non coverage enhanced mode where said some messaging is not repeated said method comprising:
broadcasting a master information block comprising information regarding the network from the network node;
broadcasting system information blocks comprising information on how to attach to the network; and
signalling to user equipment that is not currently connected to said network, a coverage enhanced mode indicator indicating to said user equipment whether said network node is currently operating in said coverage enhanced mode or not.

2. A method according to claim 1, wherein said coverage enhanced mode indicator comprises a single bit.

3. A method according to claim 1 or 2, wherein at least one of said master information block a first of a plurality of said system information blocks and a paging message comprises said coverage enhanced mode indicator.

4. A method according to claim 3, wherein said coverage enhanced mode indicator is located at a predetermined position in said at least one of at least one of said master information block, a first of a plurality of said system information blocks and a paging message comprises said coverage enhanced mode indicator.

5. A method according to any preceding claim, comprising paging information to said user equipment indicating a change of mode of said network node, wherein when said change of mode comprises switching into or out off said coverage enhanced mode said paging information indicates said change.

6. A method according to claim 5, wherein when said coverage enhanced mode is turning off said indication comprises an indication of a time when said coverage enhanced mode is to turn off.

7. A method according to any one of claims 5 or 6, comprising repeatedly transmitting said paging message over a plurality of discontinuous receive cycle (DRX) time periods.

8. A method according to any preceding claim, comprising switching from said non coverage enhanced mode of operation to said coverage enhanced mode of operation and remaining in said coverage enhanced mode of operation for longer than a predetermined time period, said predetermined time period selected to be equal to a user equipment connection retry time period.

9. A method according to claim 8, comprising a further step of signalling to said user equipment said user equipment connection retry time period, said connection retry time period indicating a length of time that said user equipment should wait before trying to connect to said network again following receipt of said coverage enhanced mode indicator indicating that said network is in said non coverage enhanced mode.

10. A network node for providing network connection information to a user equipment for connecting to a wireless communication network, said wireless communication network being configured to support communication with said user equipment according to a coverage enhanced communication mode which utilises repetition of some messaging to increase coverage, and according to a non coverage enhanced mode where said some messaging is not repeated said network node comprising:
information broadcast circuitry for broadcasting a master information block comprising information regarding the network and system information blocks comprising information on how to attach to the network;
said network node being operable to indicate a current mode of operation by signalling to user equipment that is not currently connected to said network, a coverage enhanced mode indicator indicating to said user equipment whether said network node is currently operating in said coverage enhanced mode or not.

11. A method performed by a user equipment for acquiring information for connecting to a wireless communication network, said wireless communication network being configured to support communication with said user equipment according to a coverage enhanced communication mode which utilises repetition of some messaging to increase coverage, and according to a non coverage enhanced mode where said some messaging is not repeated, said method comprising:
when not currently connected to said network, receiving a coverage enhanced mode indicator indicating whether said network node is currently operating in said coverage enhanced mode or not; and
switching from an active mode to a dormant mode when said coverage enhanced mode indicator indicates that said network node is not currently operating in said coverage enhanced mode.

12. A method according to claim 11, wherein said coverage enhanced mode indicator is received in at least one of a master information block comprising information regarding the network, a first of a plurality of system information blocks comprising information on how to attach to the network and a paging message.

13. A method according to claim 11 or 12 comprising a further step of said user equipment in said active mode receiving a paging message indicating that said network node is switching to said non coverage enhanced mode, said user equipment responding to said paging message by switching to said dormant mode.

14. A user equipment for communicating via a wireless communication network, said wireless communication network being configured to support communication with said user equipment according to a coverage enhanced communication mode which utilises repetition of some messaging to increase coverage, and according to a non coverage enhanced mode where said some messaging is not repeated, said user equipment comprising:
information receiving circuitry operable to receive when said user equipment is not connected to said network a coverage enhanced mode indicator indicating whether said network node is currently operating in said coverage enhanced mode or not; and
control circuitry configured to switch said user equipment from an active mode to a dormant mode when said received coverage enhanced mode indicator indicates that said network node is not currently operating in said coverage enhanced mode.

15. A computer program configured to control a data processing apparatus to perform a method according to any one of claims 1 to 9 and 11 to 14.
